# EUROPÄISCHE PATENTSCHRIFT

(11) **EP 0 415 197 B1**
(45) Veröffentlichungstag und Bekanntmachung des Hinweises auf die Patenterteilung: **16.03.1994**
(21) Anmeldenummer: 90115743.8
(22) Anmeldetag: 17.08.1990
(51) Int. Cl.: G03B 17/26, G03B 17/30, G03C 3/00

(54) **Verfahren zur Herstellung von Filmkassetten**
Method for the production of film cassettes
Procédé de constructrion de cassettes de film

(30) Priorität: 30.08.1989 DE 3928683
(43) Veröffentlichungstag der Anmeldung: 06.03.1991
(73) Patentinhaber: Agfa-Gevaert AG, 51373 Leverkusen (DE)
(72) Erfinder: Hoffacker, Franz, Dipl.-Ing., D-4018 Langenfeld (DE); Wiedemann, Otto, Dipl.-Ing., D-8130 Starnberg (DE); Klotz, Artur, D-5090 Leverkusen 1 (DE)

(56) Entgegenhaltungen:
- DE-B- 1 037 841
- US-A- 3 537 376
- US-A- 4 867 815

## Beschreibung

Die Erfindung betrifft ein Verfahren zur Herstellung von Filmkassetten, die einen annähernd zylindrischen Mantel, ein über die Breite des Mantels verlaufendes Filmmaul aus Oberlippe und Unterlippe, eine Filmspule und stirnseitige Kappen aufweisen, wobei das Filmmaul an Ober- und Unterlippe mit einem Dichtungsmaterial, beispielsweise mit je einem Samtstreifen versehen wird.

Derartige Kassetten sind z.B. aus US 3 537 376 bekannt. Ein Verfahren zu ihrer Herstellung aus Metallblechen wird in DE-A-1 037 841 beschrieben. Die Kassetten werden insbesondere für Kleinbildfilme hergestellt.

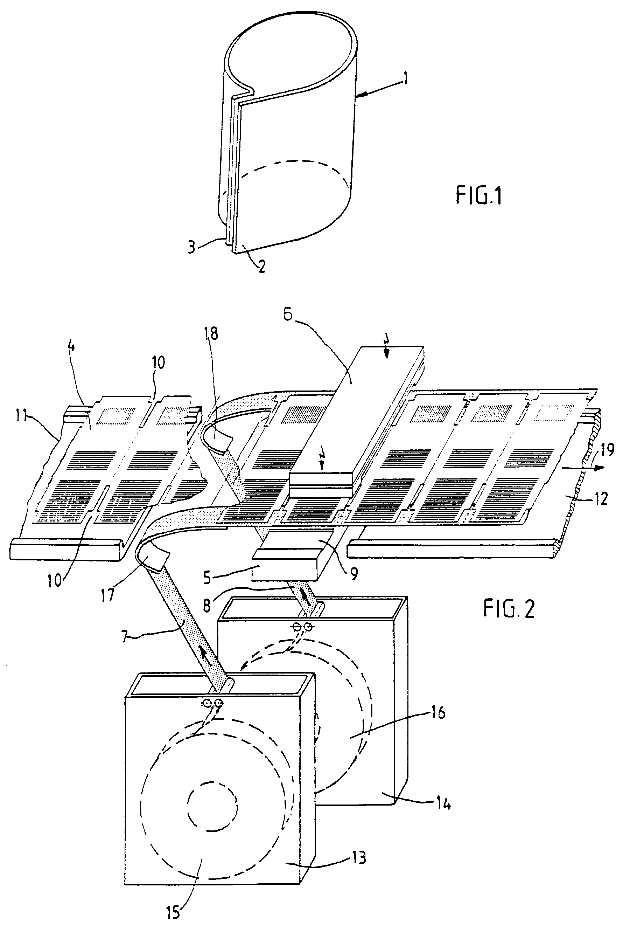

Während die Oberlippe des Filmmauls einfach dadurch gebildet wird, daß das letzte Stück des Mantelblechs tangential ausläuft, wird die Unterlippe dadurch hergestellt, daß das Mantelblech um mehr als 90° umgebogen wird (siehe Fig. 1). Die Filmkassetten werden durch Biegen eines entsprechenden flachen Blechstückes hergestellt, das vor oder nach der Biegung mit den Dichtungsstreifen verklebt werden kann. Der Dichtungsstreifen für Oberlippe und Unterlippe einer Kassette hat eine rechteckige Form, dessen Länge etwa der Kassettenhöhe entspricht. Die Breite, die bei Ober- und Unterlippe unterschiedlich groß sein kann, ist bei der Unterlippe wenigstens so groß, daß der Dichtungsstreifen über die mehr als 90°-Biegung ins Innere der Kassette hinausgeht. Die Oberflàche des Dichtungsstreifens für die Unterlippe gliedert sich in zwei Randbereiche an den Schmalseiten, einen Randbereich an der Längsseite im Inneren der Kassette und einen Randbereich an der Längsseite auf der Unterlippe. Die Randbereiche schließen einen Innenbereich der Streifenoberfläche ein, der 10 bis 60 % der Gesamtoberfläche eines Dichtungsstreifens ausmacht.

Anschließend an die Biegung wird die Filmspule in den gebogenen Mantel eingeführt und die Kassette durch Aufsetzen der stirnseitigen Kappen geschlossen. Da die Verklebung des bereits gebogenen Mantels mit dem Samt technisch aufwendig ist, ist es aus ökonomischen Gründen sinnvoll, zunächst den noch flachen Blechstreifen mit Samt zu bekleben und dann in die Form des zylindrischen Mantels mit Oberlippe und Unterlippe zu biegen.

Es hat sich aber gezeigt, daß bei dieser Art des Vorgehens ein gewisser Prozentsatz fehlerhafter Kassetten produziert wird, bei dem der Samt an der Unterlippenkante gerissen oder untolerierbar deformiert ist.

Aufgabe der vorliegenden Erfindung ist es, den flachen Blechstreifen so mit dem Samt zu versehen, daß ein Reißen des Samtes beim Biegen, insbesondere an der scharfen Biegung der Unterlippe und eine untolerierbare Deformation des Samtes vermieden werden.

Diese Aufgabe wird gemäß Patentanspruch 1 gelöst. Weitere Angestaltungen der Erfindung gehen aus den Unteransprüchen hervor.

Der Dichtungsstreifen wird insbesondere so aufgebracht, daß ein Blechstreifen, dessen Breite dem Umfang eines fertig geformten Mantels für eine Kassette und dessen Länge dem Vielfachen der Mantelbreite für eine Kassette entspricht, vorgelegt und längs der das Filmmaul bildenden Kanten mit dem Dichtungsmaterial, das in Form von fortlaufenden bandförmigen Dichtungsstreifen zugeführt wird, die im Durchlauf durch eine Klebestation mit dem Mantelstreifen verbunden werden, versehen wird.

Die Stempel, mit denen der Dichtungsstreifen angedrückt wird, sind erfindungsgemäß so gestaltet, daß für das Blech jeder Kassette nur der Rand des Dichtungsstreifens und gegebenenfalls im Mittelteil der Dichtungsstreifenoberfläche punkt- oder streifenförmige Bereiche angedrückt werden. Die übrigen Bereiche des Dichtungsmaterials, die nicht mit der Blechoberfläche verklebt werden sollen, können klebstofffrei sein oder ebenfalls Klebstoff enthalten. Vorzugsweise enthält die gesamte Oberfläche des Dichtungsmaterials Klebstoff.

Nach dem Auftragen des Dichtungsmaterials wird dieses zwischen den einzelnen Blechen geschnitten, anschließend das Blech für je eine Kassette vom Blechstreifen abgetrennt und in der angegebenen Weise zum Kassettenmantel geformt.

In den zu beklebenden Blechstreifen sind zuvor schon die Kappenkerben gestanzt worden, wie das aus Fig. 2 hervorgeht.

Die Erfindung erlaubt die Herstellung von Filmkassetten in weitgehend automatisierten Arbeitsgängen. Trotz Steigerung des Ausstoßes gewährleistet das erfindungsgemäße Verfahren eine gleichbleibend hohe Fertigungsqualität.

Dabei ist die Fertigung der Kassetten nach dem erfindungsgemäßen Verfahren sehr kostengünstig.

Ein Ausführungsbeispiel der Erfindung ist in den beigefügten Zeichnungen näher beschrieben und dargestellt.

Fig. 1 zeigt einen Kassettenmantel (1) mit Ober- (2) und Unterlippe (3), wie er an den einander gegenüberliegenden Flächen von Ober- und Unterlippe erfindungsgemäß mit Dichtungsmaterial versehen wird. Die Kappenkerben sind in dieser Fig. nicht gezeigt.

Fig. 2 zeigt eine Station zum Zuführen und Ankleben der Dichtungsstreifen.

Der Blechstreifen 4 wird im diskontinuierlichen Vorschub zwischen den Andruckblock 5 und den Heizblock 6 gezogen, und mit dem Andruckblock 5 gegen den Heizblock 6 angedrückt. Dabei schmiegen sich die Dichtungsstreifen 7, 8 an die Unterseite des Blechstreifens 4 an dessen Rändern an und laufen dabei in den nutenartigen Vertiefungen 9 des Andruckblockes 5. Die Dichtungsstreifen 7, 8 werden der Unterseite des Blechstreifens 4 an dessen Rändern in der Weise zugeführt, daß sie über die Ränder des Blechstreifens 4 seitlich geringfügig vorstehen.

Die Dichtungsstreifen 7, 8, üblicherweise aus Samt, tragen an ihrer dem Blechstreifen zugewandten Seite eine übliche Heißsiegelkleberschicht. Zur Klebung ist der Heizblock 6 mit einer nicht dargestellten, an sich bekannten elektrischen Heizvorrichtung ausgestattet, welche die Ränder des Blechstreifens 4 von oben her induktiv erwärmt. Durch Berührung mit dem erwärmten Rand des Blechstreifens 4 wird der Heißsiegelkleber aufgeschmolzen, wodurch sich die Dichtungsstreifen 7, 8 mit der Unterseite des Blechstreifens 4 verbinden und auch nach der Wiederabkühlung dauerhaft verbunden bleiben.

Da die Dichtungsstreifen 7, 8 zunächst endlos sind, überbrücken sie an der Unterseite des Blechstreifens 4 auch die randseitigen Kappenkerben 10, wie deutlich erkennbar ist.

Aus Gründen der besseren Übersichtlichkeit sind auch die Führungsschienen 11, 12 sowie der Andruckblock 5 und der Heizblock 6 in Bezug auf den Blechstreifen 4 auseinandergezogen dargestellt. Tatsächlich jedoch läuft der Blechstreifen 4 auf den Führungsschienen 11, 12.

Die Klebestation umfaßt ferner zwei Vorratsmagazine 13, 14 für die bandförmigen Dichtungsstreifen 7, 8, welche von dort enthaltenen, als Vorratsspeicher dienenden Vorratsrollen 15, 16 als "Endlos"-Bänder abgezogen werden und über ortsfest angeordnete geschwungene Kufen 17, 18 der Bahn des Blechstreifens 4 an dessen Rändern annähernd tangential von unten her zugeführt werden.

Nach dem Verlassen der Klebestation gelangt der Blechstreifen 4 im weiteren Vorschub in Richtung des Pfeiles 19 über die Führungsschiene 12 zu den weiteren Verarbeitungsstationen (Trennen der Dichtungsstreifen, Abtrennen der Einzelbleche vom Blechstreifen, Biegen der Einzelbleche zum Kassettenmantel, Einführen der Filmspule, Aufsetzen der Stirnkappen).

Die erfindungsgemäße Anbringung des Dichtungsstreifens erfolgt durch entsprechende Gestaltung des Andruckblocks 5.

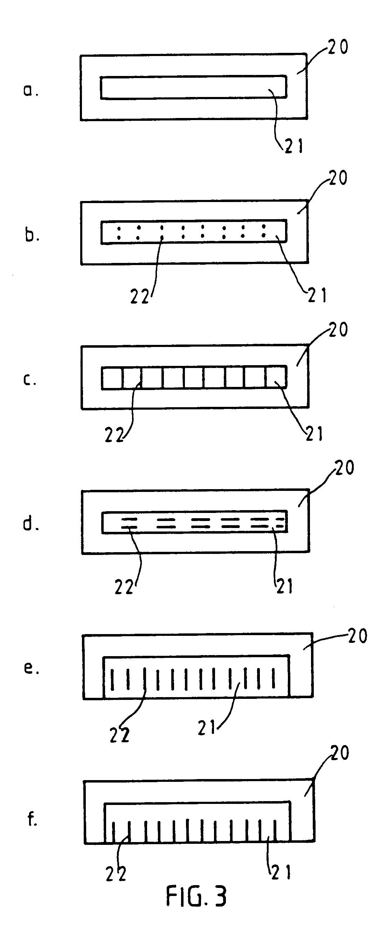

Fig. 3a bis f zeigt unterschiedliche Möglichkeiten des Verklebens der Dichtungsstreifen pro Einzelblech. Der verklebte Bereich ist mit 20, der unverklebte mit 21 bezeichnet. Innerhalb des unverklebten Bereiches können punkt- oder streifenförmige Verklebungen 22 vorgenommen werden. Bei den Ausführungsformen 3e und 3f ist die verklebte Längsseite mit der Unterlippe verklebt, die nur teilweise verklebte Längsseite im Inneren der Kassette verklebt.

Die spezielle Art der Verklebung ist für die Unterlippe charakteristisch. Das Dichtungsmaterial für die Oberlippe wird vorzugsweise vollflächig angeklebt.

Die stirnseitigen Kappen sind rotationssymmetrisch, an ihren äußeren Rändern umgebördelt und bilden mit den stirnseitigen Rändern des Kassettenmantels einen Klemmsitz sowie ein lichtdichtes Labyrinth, wenn die Kappen an den Kassettenmantel angesetzt werden. Die rotationssymmetrische Ausbildung der Kappen ist deshalb möglich, weil die stirnseitigen Kanten des fertig geformten Kassettenmantels im Bereich des Filmmauls aufgrund der Kappenkerben etwas zurückspringen, wobei die Rücksprünge den umgebördelten Rand der Kappen im Bereich des Filmmauls aufnehmen. Trotz dieser Rücksprünge bleibt die Lichtdichtheit der Kassette in diesem Bereich gewährleistet, da die Dichtungsstreifen über diese Rücksprünge vorstehen, wie aus Fig. 2 ersichtlich ist.

## Patentansprüche

1. Verfahren zur Herstellung von Filmkassetten, die einen annähernd zylindrischen Mantel (1), ein über die Breite des Mantels verlaufendes Filmmaul aus Ober- (2) und Unterlippe (3), eine Filmspule und stirnseitige Kappen aufweisen, wobei die Unterlippe entlang einer Breitseite gegen die angrenzende Mantelfläche abgewinkelt ist, und wobei die Ober- und Unterlippe des Filmmauls mit Dichtungsstreifen (7, 8) versehen sind, mit den Verfahrensschritten: Aufkleben der Dichtungsstreifen (7, 8) auf ein ebenes Blech, Biegen des Bleches zum zylindrischen Mantel mit Ober- und Unterlippe, Einführen der Filmspule und stirnseitiges Aufsetzen der Kappen, dadurch gekennzeichnet, daß der Dichtungsstreifen für die Unterlippe (3) des Filmmaules so mit dem Blech verklebt wird, daß die Randbereiche des Dichtungsstreifens an den Schmalseiten und der Randbereich des Dichtungsstreifens an der äußeren Breitseite der Unterlippe ganz mit dem Blech verklebt sind, der Randbereich des Dichtungsstreifens an der Breitseite der Unterlippe im Inneren der Kassette ganz oder teilweise mit dem Blech verklebt ist, und der Innenbereich der Dichtungsstreifenoberfläche ganz oder teilweise nicht mit dem Blech verklebt wird, so daß 10 bis 60 % der Gesamtfläche des Dichtungsstreifens nicht mit dem Blechstreifen verklebt sind.

2. Verfahren nach Anspruch 1, dadurch gekennzeichnet, daß das Ankleben der Dichtungsztreifen auf das Blech durch Andrücken der Dichtungsstreifen mit entsprechenden Stempeln und induktiver Erwärmung des Bleches erfolgt.

## Claims

1. Process for the manufacture of film cassettes which have an approximately cylindrical casing (1), a film slit comprising upper (2) and lower lip (3) extending over the width of the casing, a film spool and end caps, the lower lip being bent along a wide side against the adjacent casing surface, and the upper and lower lip of the film slit being provided with sealing strips (7, 8), with the process steps : bonding of the sealing strips (7, 8) onto a flat sheet, bending of the sheet into the cylindrical casing with upper and lower lip, insertion of the film spool and fitting of the caps at the ends, characterized in that the sealing strip for the lower lip (3) of the film slit is bonded to the sheet in such a way that the edge areas of the sealing strip on the narrow sides and the edge area of the sealing strip on the outer wide side of the lower lip are completely bonded to the sheet, the edge area of the sealing strip on the wide side of the lower lip is completely or partially bonded to the sheet inside the cassette and the inner area of the sealing strip surface is not bonded completely or partially to the sheet, so that 10 to 60% of the entire surface of the sealing strip is not bonded to the sheet strip.

2. Process according to Claim 1, characterized in that the bonding of the sealing strip onto the sheet takes place by pressing the sealing strip with corresponding stamps and inductive heating of the sheet.

## Revendications

1. Procédé de fabrication de cassettes de film qui ont une enveloppe (1) approximativement cylindrique, une bouche de sortie du film s'étendant sur la largeur de l'enveloppe et se composant d'une lèvre supérieure (2) et d'une lèvre inférieure (3), une bobine à film et des capuchons d'extrémité, la lèvre inférieure étant coudée le long d'un côté large vers la surface voisine de l'enveloppe et les lèvres supérieure et inférieure de la bouche de sortie du film étant munies de rubans d'étanchéité (7, 8), procédé comprenant les étapes de : collage des rubans d'étanchéité (7, 8) sur une tôle plane, coudage de la tôle pour en former l'enveloppe cylindrique comportant les lèvres supérieure et inférieure, introduction de la bobine de film et pose des capuchons sur les extrémités, caractérisé en ce que le ruban d'étanchéité de la lèvre inférieure (3) de la bouche de sortie du film est collé de la manière suivante à la tôle, les zones de bordure des côtés étroits du ruban d'étanchéité et la zone de bordure du ruban d'étanchéité située sur le côté extérieur large de la lèvre inférieure sont intégralement collées à la tôle, la zone de bordure du ruban d'étanchéité située sur le côté large de la lèvre inférieure se trouvant à l'intérieur de la cassette est collée intégralement ou partiellement à la tôle et la zone intérieure de la surface du ruban d'étanchéité n'est entièrement ou partiellement pas collée à la tôle, de manière que 10 à 60% de la surface totale du ruban d'étanchéité ne soient pas collés à la bande de tôle.

2. Procédé selon la revendication 1, caractérisé en ce que le collage des rubans d'étanchéité à la tôle s'effectue par serrage des rubans d'étanchéité à l'aide de poinçons correspondants et par chauffage à induction de la tôle.
